# EUROPÄISCHE PATENTANMELDUNG

(11) **EP 1 282 296 A2**
(43) Veröffentlichungstag der Anmeldung: **05.02.2003**
(21) Anmeldenummer: 02015873.9
(22) Anmeldetag: 16.07.2002
(51) Int. Cl.: H04M 3/56

(54) **Verfahren und Anordnung zum Aufbau einer Konferenzschaltung**

(30) Priorität: 30.07.2001 DE 10137226
(71) Anmelder: SIEMENS AKTIENGESELLSCHAFT, 80333 München (DE)
(72) Erfinder: Burger, Manfred, 83714 Miesbach (DE); Hohl, Hubertus, Dr., 85540 Haar (DE); Lederer, Thomas, 81379 München (DE)

(57) **Zusammenfassung**

Zum Aufbau einer Konferenzschaltung (K1) wird durch eine Auslöseinformation (AI) ein Abruf mehrerer gespeicherter, Endeinrichtungen (E1, E2) von Konferenzteilnehmern identifizierender Kommunikationsadressen (RN1, RN2) ausgelöst. Anschließend wird jeweils eine Verbindung (V1, V2) zu einer durch eine jeweilige abgerufene Kommunikationsadresse (RN1, RN2) identifizierten Endeinrichtung (E1, E2) aufgebaut und die jeweilige Endeinrichtung (E1, E2) zur Konferenzschaltung (K1) zugeschaltet.

## Beschreibung

Zeitgemäße Kommunikationssysteme unterstützen neben Zweipunktverbindungen in der Regel auch Konferenzschaltungen, d.h. Verbindungen zwischen drei oder mehr Teilnehmern. Derartige Konferenzschaltungen können beispielsweise zwischen Endeinrichtungen zur Sprach-, Video- und/oder Multimediakommunikation oder zwischen Personalcomputern aufgebaut werden, um beispielsweise Sprach-, Video- und/oder Multimediakonferenzen zu realisieren.

Eine Konferenzschaltung wird gemäß dem Stand der Technik durch einen der Konferenzteilnehmer, den sog. Konferenzmanager, durch sukzessives Anrufen und Zuschalten der anderen Konferenzteilnehmer oder mittels eines sog. Konferenzservers (Multipoint Control Unit, MCU) aufgebaut.

Beim Konferenzaufbau durch einen Konferenzmanager sind eine indirekte und eine direkte Verfahrensvariante gebräuchlich:

Beim indirekten Konferenzaufbau ruft der Konferenzmanager den ersten Konferenzteilnehmer an, legt die aufgebaute Verbindung in eine Haltezustand, macht eine Rückfrage beim nächsten Konferenzteilnehmer, nimmt beide in die Konferenzschaltung auf und legt diese gegebenenfalls in einen Haltezustand, um einen weiteren Konferenzteilnehmer anzurufen. Diese Verfahrensschritte werden solange wiederholt, bis alle Konferenzteilnehmer zur Konferenzschaltung zugeschaltet sind.

Beim direkten Konferenzaufbau kann - soweit dies vom betreffenden Kommunikationssystem unterstützt wird - aus einem aktiven Gespräch oder einer aktiven Konferenzschaltung heraus direkt ein weiterer Konferenzteilnehmer angerufen werden, ohne dass vorher die Konferenzschaltung in einen Haltezustand zu versetzen ist. Sobald ein auf diese Weise gerufener Konferenzteilnehmer den Anruf annimmt, ist er unmittelbar in die Konferenzschaltung integriert.

Sowohl beim direkten als auch beim indirekten Konferenzaufbau sind die Konferenzteilnehmer gemäß dem Stand der Technik einzeln und nacheinander durch den Konfernzmanger anzurufen. Ein derartiger Konferenzaufbau ist jedoch insbesondere bei Konferenzen mit einer Vielzahl von Konferenzteilnehmern sehr zeitaufwendig und anfällig für Bedienfehler.

Bei einem Konferenzaufbau mittels eines Konferenzservers wählen sich die Konferenzteilnehmer einzeln beim Konferenzserver ein und werden von diesem zur Konferenzschaltung hinzugeschaltet. Diese Art des Konferenzaufbaues erfordert jedoch, dass sich die Konferenzteilnehmer vorab über einen Zeitpunkt sowie über die Teilnehmer der Konferenz verständigen. Auch dies ist in der Regel sehr zeitaufwändig.

Es ist Aufgabe der vorliegenden Erfindung ein Verfahren und Anordnungen anzugeben, mittels derer ein Aufbau einer Konferenzschaltung vereinfacht wird.

Gelöst wird diese Aufgabe durch ein Verfahren mit den Merkmalen des Patentanspruchs 1, durch eine Konferenzaufbaueinrichtung mit den Merkmalen des Patentanspruchs 14 sowie durch eine Endeinrichtung mit den Merkmalen des Patentanspruchs 18.

Durch die Erfindung wird ein Aufbau einer Konferenzschaltung, z.B. zur Sprach-, Video- und/oder Multimediakommunikation, weitgehend automatisiert. Dies hat den Vorteil, dass eine Konferenzschaltung wesentlich schneller und flexibler als nach dem bisherigen Stand der Technik aufgebaut werden kann, wodurch das Anwendungsspektrum von Konferenzschaltungen wesentlich erweitert wird. Durch einen Abruf von bereits gespeicherten Kommunikationsadressen zur Identifizierung von Endeinrichtungen der Konferenzteilnehmer werden gegenüber einer manuellen Eingabe von Kommunikationsadressen Eingabeund Bedienfehler reduziert.

Die Endeinrichtungen, zwischen denen die Konferenzschaltung aufgebaut wird, können beispielsweise Endgeräte, Personalcomputer, Clients und/oder Benutzeranwendungen, jeweils zur Sprach-, Video- und/oder Multimediakommunikation sein. Die Kommunikationsadressen zur Identifizierung der Endeinrichtungen können beispielsweise durch Rufnummern, Namen von Konferenzteilnehmern, Internetprotokoll-Adressen und/oder sogenannte URLs (Uniform Resource Locator) realisiert sein. Der Konferenzaufbau wird durch eine Auslöseinformation, beispielsweise in Form eines Auslösesignals oder einer Auslösemeldung ausgelöst.

Die erfindungsgemäße Konferenzaufbaueinrichtung kann als Baugruppe, Anwendung oder Client lokal in einer oder mehreren Endeinrichtungen oder auch zentral in einem zentralem Server implementiert sein. Eine lokale Implementierung ist insofern vorteilhaft, als sie eine individuelle Konfigurierung der Konferenzaufbaueinrichtung an jeder derartig ausgestatteten Endeinrichtung erlaubt. Gegenüber einem Konferenzserver gemäß dem bekannten Stand der Technik weist die Erfindung als weiteren Vorteil auf, dass keine zusätzlichen Kosten für eine Inanspruchnahme eines Konferenzdienstes anfallen und dass keine zusätzliche Ressourcenreservierung erforderlich ist. Ein weiterer Vorteil der Erfindung besteht darin, dass zu ihrer Implementierung keine Änderungen an einer bestehenden Vermittlungstechnik notwendig sind. Die Erfindung lässt sich somit auf einfache Weise in bestehende Kommunikationssysteme integrieren.

Vorteilhafte Ausführungsformen und Weiterbildungen der Erfindung sind in den abhängigen Ansprüchen angegeben.

Nach einer vorteilhaften Weiterbildung der Erfindung kann ein Satz von Kommunikationsadressen einer Konferenzkennung zugeordnet gespeichert werden. Die Auslöseinformation kann dann eine Erfassung einer Konferenzkennung auslösen, um so einen Abruf derjenigen Kommunikationsadressen auszulösen, die der erfassten Konferenzkennung zugeordnet sind. Auf diese Weise können mehrere Sätze von Kommunikationsadressen, die jeweils verschiedene Gruppen von Konferenzteilnehmern repräsentieren, jeweils einer eindeutigen Konferenzkennung zugeordnet werden. Durch die Auslöseinformation kann dann je nach erfasster Konferenzkennung selektiv eine Konferenzschaltung mit einer durch die Konferenzkennung ausgewählten Gruppe von Konferenzteilnehmern ausgelöst werden.

Nach einer vorteilhaften Ausführungsform der Erfindung kann die Auslöseinformation, gegebenenfalls mit Konferenzkennung, durch eine Benutzereingabe an einer Endeinrichtung generiert werden. Die Konferenzaufbaueinrichtung kann dazu eine Benutzerschnittstelle zu einer Endeinrichtung aufweisen. Die Generierung der Auslöseinformation und damit das Auslösen eines Konferenzaufbaus kann z.B. bereits durch einen einzelnen Tastendruck oder Mausklick an einer Endeinrichtung eines Benutzers veranlasst werden. Beispielsweise kann eine durch eine Konferenzkennung identifizierte Konferenzgruppe einer Kurzwahltaste oder einem Auslösefeld einer grafischen Bedienoberfläche zugeordnet werden, um auf Tastendruck oder Mausklick eine Auslöseinformation mit dieser Konferenzkennung zu generieren.

Weiterhin können bereits abgehaltene Konferenzen in einem Anrufjournal mit den die betreffenden Konferenzteilnehmer identifizierenden Kommunikationsadressen gespeichert werden. Durch Auswahl einer solchen im Anrufjournal gespeicherten Konferenz kann ein Aufbau einer Konferenz mit denselben Konferenzteilnehmern, vorzugsweise per Tastendruck oder Mouseklick ausgelöst werden. Ferner kann eine Konferenzschaltung dadurch aufgebaut werden, dass zunächst deren Teilnehmer aus einem oder mehreren elektronischen Adressbüchern, vorzugsweise menügeführt ausgewählt und die betreffenden Kommunikationsadressen abgespeichert werden. Anschließend wird eine Auslöseinformation generiert, die den Abruf der gespeicherten Kommunikationsadressen und den Konferenzaufbau auslöst.

Alternativ dazu kann die Auslöseinformation auch durch eine Terminkalenderanwendung generiert werden. Auf diese Weise kann eine Konferenzschaltung durch die Terminkalenderanwendung, z.B. zu einem vorgegebenen Zeitpunkt, der einem in der Terminkalenderanwendung gespeicherten Konferenztermin entspricht, initiiert werden. Ein Konferenzeintrag in der Terminkalenderanwendung enthält neben dem Konferenztermin vorzugsweise auch Angaben, anhand derer die Konferenzaufbaueinrichtung die Konferenzteilnehmer bzw. deren Endeinrichtungen identifizieren kann. Vorzugsweise sind die Kommunikationsadressen der Konferenzteilnehmer in der Terminkalenderanwendung zum Abruf durch die Konferenzaufbaueinrichtung gespeichert.

Gemäß einer bevorzugten Weiterbildung der Erfindung kann im Rahmen des Verbindungsaufbaues zu einer jeweiligen Endeinrichtung eine Hinweisinformation über den Konferenzaufbau abgerufen und an diese Endeinrichtung ausgegeben werden. Die Hinweisinformation kann hierbei sowohl vor Vollendung des Verbindungsaufbaus, z.B. zur Anzeige auf einem Display oder einer grafischen Bedienoberfläche der betreffenden Endeinrichtung, oder nach Vollendung des Verbindungsaufbaus, z.B. in Form eines gesprochenen Hinweises, ausgegeben werden. Vorzugsweise kann der betreffende Konferenzteilnehmer durch die Hinweisinformation darüber informiert werden, dass er zu einer Konferenzschaltung zugeschaltet wird.

Weiterhin kann für den Fall, dass die Konferenzschaltung durch eine Endeinrichtung initiiert wird, im Rahmen des Konferenzaufbaues eine Hinweisinformation über den Konferenzaufbau an diese initiierende Endeinrichtung ausgegeben werden. Auf diese Weise kann ein die Konferenz initiierender Konferenzteilnehmer durch Hinweisinformationen in Form von Statusrückmeldungen über den Fortschritt des Konferenzaufbaus informiert werden.

Weiterhin kann beim Zuschalten einer jeweiligen Endeinrichtung zur Konferenzschaltung eine Hinweisinformation, z.B. eine spezifische Zuschalteinformation, an bereits zugeschaltete Endeinrichtungen ausgegeben werden.

Eine jeweils auszugebende Hinweisinformation kann durch die Konferenzaufbaueinrichtung aus einem Speicher, z. B. als Audiokonserve, abgerufen und/oder zumindest teilweise, z.B. durch eine Sprachsyntheseeinrichtung oder einen akustischen Signalgeber generiert werden. Eine Hinweisinformation kann auch durch Zusammenfügen vorgegebener Audiobausteine gebildet werden. Eine Generierung der Hinweisinformation kann insbesondere abhängig vom Konferenzstatus erfolgen.

Die an eine Endeinrichtung ausgegebene Hinweisinformation kann auf einem Display oder einer grafischen Bedienoberfläche der betreffenden Endeinrichtung dargestellt werden. Weiterhin kann die Hinweisinformation in Sprachform, z.B. als gesprochener Hinweis, an der betreffenden Endeinrichtung ausgegeben werden.

Gemäß einer bevorzugten Ausführungsform der Erfindung können die Verbindungen zu den durch die abgerufenen Kommunikationsadressen identifizierten Endeinrichtungen parallel aufgebaut werden. Durch den parallelen Verbindungsaufbau wird die zum Aufbau einer Konferenz benötigte Zeitdauer beträchtlich verringert.

Gemäß einer weiteren vorteilhaften Weiterbildung der Erfindung kann bei Fehlschlagen eines Verbindungsaufbaus zu einer Endeinrichtung eines Konferenzteilnehmers mindestens ein erneuter Verbindungsversuch in einem vorgegebenem Zeitabstand durchgeführt werden. Vorzugsweise können mehrere Verbindungsversuche in regelmäßigen Zeitabständen durchgeführt werden. Weiterhin kann bei Fehlschlagen eines Verbindungsaufbaus zu einer Endeinrichtung eines Konferenzteilnehmers auch eine Rückrufschaltung für diese Endeinrichtung aktiviert werden. Vorzugsweise kann bei Fehlschlagen eines Verbindungsaufbaus eine Rückmeldung in Form einer Hinweisinformation an eine jeweilige Endeinrichtung eines oder mehrerer Konferenzteilnehmer ausgeben werden.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit mehreren an ein Kommunikationsnetz gekoppelten Endeinrichtungen und
Fig 2 eine erfindungsgemäße Konferenzaufbaueinrichtung.

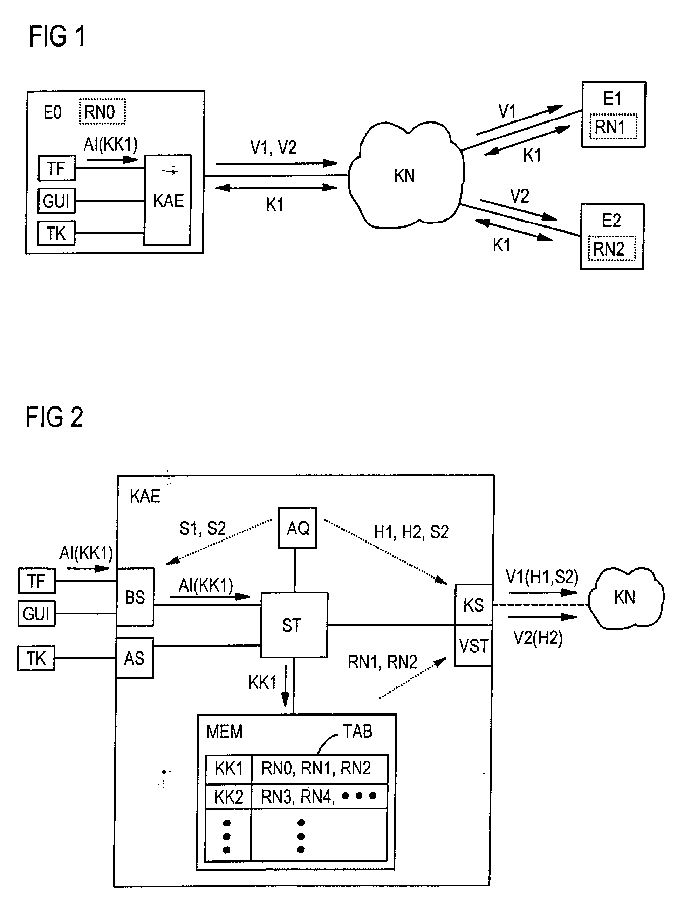

In **Fig 1** ist ein Kommunikationssystem mit drei an ein Kommunikationsnetz KN gekoppelten Endeinrichtungen E0, E1 und E2 schematisch dargestellt. Das Kommunikationsnetz KN kann hierbei ein leitungsvermitteltes Kommunikationsnetz (SCN) oder ein paketvermitteltes Kommunikationsnetz, wie z.B. ein lokales Netzwerk (LAN) oder ein Weitverkehrsnetz (WAN) sein. Insbesondere kann das Kommunikationsnetz KN durch ein internetprotokollbasiertes Netzwerk (ein sog. Voice-over-Internetprotokoll(VoIP)-Netzwerk), vorzugsweise gemäß den ITU-T-Empfehlungen H.323 und H.450 realisiert sein. Die Endeinrichtungen E0, E1 und E2 können beliebige Endeinrichtungen zur Sprach-, Video- und/oder Multimediakommunikation sein, wie z.B. Telefone oder computerbasierte VoIP-Anwendungen oder VoIP-Clients. Jeder Endeinrichtung E0, E1 und E2 ist als Kommunikationsadresse eine Rufnummer RN0, RN1 bzw. RN2 zugeordnet, über die die betreffende Endeinrichtung über das Kommunikationsnetz KN adressierbar bzw. erreichbar ist. Die jeweilige Zuordnung einer Rufnummer RN0, RN1 und RN2 zu einer jeweiligen Endeinrichtung ist in Fig 1 durch punktierte Rechtecke angedeutet.

Im Folgenden wird ein von der Endeinrichtung E0 aus initiierter Aufbau einer Konferenzschaltung zwischen den Endeinrichtungen E0, E1 und E2 betrachtet. Ein die Konferenzschaltung initiierender Benutzer der Endeinrichtung E0 wird im Folgenden als Konferenzmanager bezeichnet.

Die Endeinrichtung E0 weist als Funktionskomponenten eine erfindungsgemäße Konferenzaufbaueinrichtung KAE, die beispielsweise als Baugruppe, Softwareanwendung oder Client realisiert sein kann, ein Tastenfeld TF, eine grafische Bedienoberfläche GUI, sowie eine Terminkalenderanwendung TK auf. Das Tastaturfeld TF, die grafische Bedienoberfläche GUI und die Terminkalenderanwendung TK weisen jeweils eine Schnittstelle zur Konferenzaufbaueinrichtung KAE auf.

Der Aufbau der Konferenzschaltung kann sowohl vom Konferenzmanager über das Tastenfeld TF oder über die grafische Bedienoberfläche GUI als auch selbständig durch die Terminkalenderanwendung TK initiiert werden.

Der Konferenzmanager kann die Konferenzschaltung auf unterschiedliche Weise initiieren. Beispielsweise kann der Konferenzmanager vorab eine oder mehrere Gruppen von Konferenzteilnehmern, bzw. deren Rufnummern, an der Endeinrichtung E0 eingeben und jeweils einer Kurzwahltaste auf dem Tastenfeld TF oder einem Auswahlfeld der Bedienoberfläche GUI zuordnen. In diesem Fall kann eine Konferenzschaltung durch einen einfachen Druck der Kurzwahltaste oder einen Mausklick auf das Auswahlfeld zwischen den jeweils zugeordneten Konferenzteilnehmern ausgelöst werden. Nach einer Verfahrensvariante können bereits abgehaltene Konferenzen jeweils als Eintrag in einem Anrufjournal gespeichert werden. Durch Auswahl eines derartigen Eintrages, z.B. durch Tastendruck auf dem Tastenfeld TF oder durch Mausklick in der grafischen Bedienoberfläche GUI, kann dann auf einfache Weise eine erneute Konferenzschaltung zwischen Teilnehmern einer bereits abgehaltenen Konferenz veranlasst werden. Darüber hinaus kann der Konferenzmanager Konferenzteilnehmer auch aus einem anderen elektronischen Adressspeicher, vorzugsweise menügeführt auswählen und danach einen Aufbau einer Konferenzschaltung zwischen den ausgewählten Konferenzteilnehmern, z.B. durch Tastendruck oder Mausklick auslösen.

Durch die Terminkalenderanwendung TK kann die Konferenzschaltung selbständig zu einem vorgegebenen Zeitpunkt ausgelöst werden, der beispielsweise aus einem in der Terminkalenderanwendung TK abgespeicherten Konferenztermin abgeleitet wird. Sofern mit dem Konferenztermin auch die gewünschten Konferenzteilnehmer in der Terminkalenderanwendung TK eingetragen sind, kann die Konferenzaufbaueinrichtung KAE anhand dieses Eintrags die Konferenzteilnehmer und deren Rufnummern identifizieren. Falls die Rufnummern der Konferenzteilnehmer nicht in der Terminkalenderanwendung eingetragen sind, kann die Konferenzaufbaueinrichtung KAE diese Rufnummern selbständig aus einem oder mehreren Adressspeichern (nicht dargestellt) ermitteln.

Für das vorliegende Ausführungsbeispiel sei angenommen, das der Konferenzmanager eine Konferenzschaltung K1 durch einen einzelnen Tastendruck auf dem Tastenfeld TF auslöst. Aufgrund des Tastendrucks wird eine einzelne Auslöseinformation AI vom Tastenfeld TF zur Konferenzaufbaueinrichtung KAE übermittelt. Die Auslöseinformation AI umfasst eine Konferenzkennung KK1, der eine vorgegebene Gruppe von Konferenzteilnehmern bzw. deren Endeinrichtungen, hier E0, E1 und E2, zugeordnet sind. Durch die Auslöseinformation AI wird in der Konferenzaufbaueinrichtung KAE ein Abruf von die Endeinrichtungen E0, E1 und E2 identifizierenden Rufnummern, hier RN0, RN1 und RN2 ausgelöst. Anschließend wird durch die Konferenzaufbaueinrichtung KAE ein Aufbau einer Zweipunktverbindung V1 zur durch die Rufnummer RN1 identifizierten Endeinrichtung E1 und einer Zweipunktverbindung V2 zur durch die Rufnummer RN2 identifizierten Endeinrichtung E2, jeweils über das Kommunikationsnetz KN veranlasst. Nach Aufbau der Zweipunktverbindungen V1 und V2 werden die Endeinrichtungen E1 und E2 zusammen mit der Endeinrichtung E0 zu einer Konferenzschaltung K1 über das Kommunikationsnetz KN zusammengeschaltet. Eine jeweilige Endeinrichtung E1 oder E2 kann hierbei entweder unmittelbar bei Annahme der Zweipunktverbindung V1 bzw. V2 durch den betreffenden Teilnehmer oder erst nach Empfang einer Hinweisinformation über den Konferenzaufbau zur Konferenzschaltung K1 zugeschaltet werden.

Der Aufbau der Zweipunktverbindungen V1 und V2 kann nach unterschiedlichen, vom Konferenzmanager auswählbaren Verfahrensvarianten erfolgen:
1. Die Zweipunktverbindungen V1 und V2 können - soweit dies von der Endeinrichtung E0 unterstützt wird - zu den Endeinrichtungen, hier E1 und E2, aller weiteren Konferenzteilnehmer parallel aufgebaut werden. Auf diese Weise wird der Zeitbedarf zum Aufbau der Konferenzschaltung K1 beträchtlich verringert. Ein solcher paralleler Aufbau von Zweipunktverbindungen zum Zwecke eines Konferenzaufbaus ist bei bisher bekannten Verfahren zum Konferenzaufbau nicht möglich.
2. Die Zweipunktverbindungen V1 und V2 können in einer vorgebaren Reihenfolge aufgebaut werden. Vorzugsweise ist die Reihenfolge vom Konferenzmanager vor Initiierung der Konferenzschaltung konfigurierbar.
3. Die Zweipunktverbindungen V1 und V2 können nacheinander aufgebaut werden, wobei jeder Verbindungsaufbau jeweils vom Konferenzmanager nach Rückfrage zu bestätigen ist. Auf diese Weise können beispielsweise einzelne Konferenzteilnehmer übersprungen werden.

Nach einem vollständigen Aufbau der Konferenzschaltung K1 kann eine Übergabe der Konferenzschaltung K1 an den Konferenzmanager beispielsweise durch ein akustisches Signal angezeigt werden.

Falls der Aufbau der Zweipunktverbindung V1 oder V2 zur Endeinrichtung E1 bzw. E2 fehlschlägt, z.B. weil der betreffende Konferenzteilnehmer nicht erreichbar ist, oder die betreffende Endeinrichtung E1 bzw. E2 im Besetztzustand ist, können unterschiedliche Verfahrensvarianten vorgesehen sein:
1. Die Konferenzaufbaueinrichtung KAE kann eine Aktivierung einer Rückrufschaltung für die betreffende Endeinrichtung E1 bzw. E2 veranlassen. Sobald die betreffende Endeinrichtung E1 bzw. E2 frei wird, kann die Konferenzaufbaueinrichtung KAE erneut versuchen, die betreffende Endeinrichtung E1 bzw. E2 zur Konferenzschaltung K1 zuzuschalten.
2. Die Konferenzaufbaueinrichtung KAE kann in regelmäßigen Zeitabständen eine erneute Anwahl der betreffenden Endeinrichtung E1 bzw. E2 veranlassen. Zwischenzeitlich können hierbei Endeinrichtungen von anderen Konferenzteilnehmern angewählt oder zugeschaltet werden.
3. Die Konferenzaufbaueinrichtung KAE kann den Konferenzmanager über das Fehlschlagen eines Verbindungsaufbaus zu einer Endeinrichtung informieren und unmittelbar mit einem Anwählen oder Zuschalten einer anderen Endeinrichtung fortfahren.

Die Konferenzaufbaueinrichtung KAE ist vorzugsweise derart ausgestaltet, dass die Auswahl einer geeigneten Verfahrensvariante konfigurierbar und insbesondere situationsabhängig konfigurierbar ist.

Vorzugsweise wird der Konferenzmanager durch die Konferenzaufbaueinrichtung KAE nach oder während des Aufbaus der Konferenzschaltung K1 über einen Konferenzstatus und/oder über nicht erreichbare Konferenzteilnehmer informiert.

**Fig 2** zeigt die erfindungsgemäße Konferenzaufbaueinrichtung KAE in schematischer Darstellung. Die Konferenzaufbaueinrichtung KAE weist als Funktionskomponenten eine zentrale Steuereinrichtung ST, eine Konferenzspeichereinrichtung MEM zum Speichern und Erfassen von Kommunikationsadressen von Konferenzteilnehmern, eine Audioquelle AQ, eine Benutzerschnittstelle BS zum Tastenfeld TF und zur grafischen Bedienoberfläche GUI, eine Anwenderschnittstelle AS zur Terminkalenderanwendung TK, eine Kommunikationsschnittstelle KS sowie eine mit dieser gekoppelte Verbindungssteuerung VST auf. Über die Kommunikationsschnittstelle KS ist die Konferenzaufbaueinrichtung KAE an eine Kommunikationsplattform (nicht dargestellt) der Endeinrichtung E0 angekoppelt und hat über diese Kommunikationsplattform - wie durch eine strichlierte Linie angedeutet - Zugriff auf das Kommunikationsnetz KN. Durch die Verbindungssteuerung VST kann ein Aufbau von Verbindungen, hier V1 und V2, über das Kommunikationsnetz KN und ein Zusammenschalten von Verbindungen zu einer Konferenzschaltungen, hier K1, veranlasst werden. Die Verbindungssteuerung VST, die Kommunikationsschnittstelle KS, die Konferenzspeichereinrichtung MEM, die Audioquelle AQ, die Benutzerschnittstelle BS und die Anwendungsschnittstelle AS sind jeweils mit der zentralen Steuereinrichtung ST gekoppelt.

Die Konferenzspeichereinrichtung MEM enthält eine Adresstabelle TAB, in der Sätze von Rufnummern (RN0, RN1, RN2) bzw. (RN3, RN4, ...) jeweils einer Konferenzkennung KK1 bzw. KK2 zugeordnet abgespeichert sind. Jeder Satz von Rufnummern in der Adresstabelle TAB identifiziert die Endeinrichtungen aller Teilnehmer an einer jeweiligen Konferenz. Beispielsweise identifizieren die der Konferenzkennung KK1 zugeordneten Rufnummern RN0, RN1 RN2 die Endeinrichtungen E0, E1, und E2 der Teilnehmer der Konferenz K1.

Zum Auslösen der Konferenzschaltung K1 wird die Auslöseinformation AI mit der Konferenzkennung KK1 vom Tatstaturfeld TF über die Benutzerschnittstelle BS zur zentralen Steuereinrichtung ST übermittelt und von dieser erfasst. Durch die zentrale Steuereinrichtung ST wird die Auslöseinformation AI als solche erkannt und infolgedessen ein Aufbau der Konferenzschaltung K1 ausgelöst. Hierbei wird die Konferenzkennung KK1 aus der Auslöseinformation AI extrahiert und zur Konferenzspeichereinrichtung MEM übermittelt. Durch die Übermittlung der Konferenzkennung KK1 wird ein Abruf der dieser Konferenzkennung KK1 in der Adresstabelle TAB zugeordneten Rufnummern RN0, RN1 und RN2 veranlasst. Dabei wird festgestellt, dass die Rufnummer RN0 der Endeinrichtung E0 zugeordnet ist, von der die Konferenzschaltung K1 ausgelöst wird. Die verbleibenden, der Konferenzkennung KK1 zugeordneten Rufnummern RN1 und RN2 werden daraufhin, wie durch einen punktierten Pfeil angedeutet, zur Verbindungssteuerung VST übermittelt. Durch die Verbindungssteuerung VST wird daraufhin ein Aufbau einer Zweipunktverbindung V1 zu der durch die übermittelte Rufnummer RN1 identifizierten Endeinrichtung E1 sowie einer Zweipunktverbindung V2 zu der durch die übermittelte Rufnummer RN2 identifizierten Endeinrichtung E2 veranlasst.

Im Rahmen des Verbindungsaufbaus zu den Konferenzteilnehmern wird jeder Konferenzteilnehmer über den Konferenzaufbau durch Übermittlung einer Hinweisinformation H1 bzw. H2 informiert. Im vorliegenden Ausführungsbeispiel werden zu diesem Zweck durch die Audioquelle AQ akustische Hinweisinformationen H1 und H2 abgerufen. bzw. generiert und - wie durch einen punktierten Pfeil angedeutet - über die Kommunikationsschnittstelle KS ausgegeben. Die Hinweisinformation H1 wird über die Zweipunktverbindung V1 zur Endeinrichtung E1 und die Hinweisinformation H2 über die Zweipunktverbindung V2 zur Endeinrichtung E2 übermittelt. Die Hinweisinformationen H1 und H2 können durch die Audioquelle AQ vorzugsweise in Sprachform generiert werden. Beispielsweise durch Abrufen und Einspielen von Audiokonserven, wie z.B. "Sie nehmen in Kürze an einer Konferenzschaltung teil. Bitte warten ...", durch Erzeugen status- oder kontextabhängiger Audioclips mittels Sprachsynthese und/oder durch Zusammenfügen gespeicherter Audiobausteine, wie z. B. "Sie nehmen ihn Kürze an einer Konferenzschaltung teil. Weitere Teilnehmer sind Herr Müller und Frau Meier. Bitte warten ...". Alternativ oder zusätzlich kann auch eine Hinweisinformation zur Darstellung auf einem Display und/oder einer grafischen Bedienoberfläche der gerufenen Endeinrichtungen, hier E1 und E2, vorgesehen sein.

Vorzugsweise werden beim Hinzuschalten einer Endeinrichtung eines Konferenzteilnehmers die bereits zugeschalteten Konferenzteilnehmer von der Konferenzaufbaueinrichtung KAE durch eine Hinweisinformation in Form einer Zuschalte- oder Statusinformation über die Zuschaltung informiert. Eine solche Zuschalte- oder Statusinformation kann beispielsweise ein akustisches Signal oder ein gesprochener Hinweis sein. Solange sich eine aufzubauende Konferenz in einem Haltezustand befindet, kann alternativ oder zusätzlich zu einer gebräuchlichen Haltemusik (Musik-On-Hold) eine der oben beschriebenen Hinweisinformationen in die gehaltene Konferenz eingespielt werden. Darüber hinaus kann durch die Konferenzaufbaueinrichtung KAE eine Hinweisinformation über den Status des Konferenzaufbaus in Form einer Rückmeldung an der Endeinrichtung E0 des Konferenzmanagers ausgegeben werden.

Für das vorliegende Ausführungsbeispiel sei angenommen, dass die Zweipunktverbindung V1 zur Endeinrichtung E1 zeitlich vor der Zweipunktverbindung V2 zur Endeinrichtung E2 aufgebaut wird und infolgedessen die Endeinrichtung E1 vor der Endeinrichtung E2 zur Konferenz K1 zugeschaltet wird. Dementsprechend wird bei Zuschaltung der Endeinrichtung E1 die Audioquelle AQ durch die Steuereinrichtung ST dazu veranlasst, eine akustische Status- bzw. Zuschalteinformation S1 als Hinweisinformation zu generieren und über die Benutzerschnittstelle BS an der Endeinrichtung E0 auszugeben. Analog dazu wird beim Zuschalten der Endeinrichtung E2 die Audioquelle AQ von der Steuereinrichtung ST dazu veranlasst, eine Status- bzw. Zuschalteinformation S2 zu generieren und sowohl über die Benutzerschnittstelle BS zur Endeinrichtung E0 als auch über die Kommunikationsschnittstelle KS an die bereits vorher zugeschaltete Endeinrichtung E1 im Rahmen der Zweipunktverbindung V1 zu übermitteln.

Alternativ oder zusätzlich können auch Hinweisinformationen zur Darstellung auf einer grafischen Bedienoberfläche des Konferenzmanagers oder der anderen Konferenzteilnehmer generiert und ausgegeben werden. Auf diese Weise kann beispielsweise ständig angezeigt werden, wer gegenwärtig an der Konferenzschaltung teilnimmt, oder wer nicht erreichbar war. Weiterhin lässt sich eine Konfiguration der Konferenzaufbaueinrichtung KAE mittels einer grafischen Bedienoberfläche besonders einfach durchführen.

## Patentansprüche

1. Verfahren zum Aufbau einer Konferenzschaltung (K1), wobei
a) durch eine Auslöseinformation (AI) ein Abruf mehrerer gespeicherter, Endeinrichtungen (E1, E2) von Konferenzteilnehmern identifizierender Kommunikationsadressen (RN1, RN2) ausgelöst wird,
b) jeweils eine Verbindung (V1, V2) zu einer durch eine jeweilige abgerufene Kommunikationsadresse (RN1, RN2) identifizierten Endeinrichtung (E1, E2) aufgebaut wird, und
c) die jeweilige Endeinrichtung (E1, E2) zur Konferenzschaltung (K1) zugeschaltet wird.

2. Verfahren nach Anspruch 1,
**dadurch gekennzeichnet,**
**dass** ein Satz von Kommunikationsadressen (RN1, RN2) einer Konferenzkennung (KK1) zugeordnet gespeichert wird,
**dass** die Auslöseinformation (AI) eine Erfassung einer Konferenzkennung (KK1) auslöst und
**dass** durch die Auslöseinformation (AI) ein Abruf derjenigen Kommunikationsadressen (RN1, RN2) ausgelöst wird, die der erfassten Konferenzkennung (KK1) zugeordnet sind.

3. Verfahren nach Anspruch 1 oder 2,
**dadurch gekennzeichnet,**
**dass** die Auslöseinformation (AI) durch eine Benutzereingabe an einer Endeinrichtung (E0) generiert wird.

4. Verfahren nach Anspruch 1 oder 2,
**dadurch gekennzeichnet,**
**dass** die Auslöseinformation (AI) durch eine Terminkalenderanwendung (TK) generiert wird.

5. Verfahren nach einem der vorhergehenden Ansprüche,
**dadurch gekennzeichnet,**
**dass** im Rahmen des Verbindungsaufbaus zu einer jeweiligen Endeinrichtung (E1, E2) eine Hinweisinformation (H1, H2) über den Konferenzaufbau abgerufen und an diese Endeinrichtung (E1, E2) ausgegeben wird.

6. Verfahren nach einem der vorhergehenden Ansprüche,
**dadurch gekennzeichnet,**
**dass** die Konferenzschaltung durch eine Endeinrichtung (E0) initiiert wird und
im Rahmen des Konferenzaufbaus eine Hinweisinformation (S1, S2) über den Konferenzaufbau an diese Endeinrichtung (E0) ausgegeben wird.

7. Verfahren nach einem der vorhergehenden Ansprüche,
**dadurch gekennzeichnet,**
**dass** beim Zuschalten einer jeweiligen Endeinrichtung zur Konferenzschaltung eine Hinweisinformation an bereits zugeschaltete Endeinrichtungen ausgegeben wird.

8. Verfahren nach Anspruch 5, 6 oder 7,
**dadurch gekennzeichnet,**
**dass** die an eine Endeinrichtung (E0, E1, E2) ausgegebene Hinweisinformation (H1, H2, S1, S2) auf einem Display der betreffenden Endeinrichtung (E0, E1, E2) dargestellt wird.

9. Verfahren nach Anspruch 5, 6 oder 7,
**dadurch gekennzeichnet,**
**dass** die an eine Endeinrichtung (E0, E1, E2) ausgegebene Hinweisinformation (H1, H2, S1, S2) mittels einer grafischen Bedienoberfläche (GUI) der betreffenden Endeinrichtung (E0, E1, E2) dargestellt wird.

10. Verfahren nach Anspruch 5, 6 oder 7,
**dadurch gekennzeichnet,**
**dass** die Hinweisinformation (H1, H2, S1, S2) in Sprachform an der betreffenden Endeinrichtung (E0, E1, E2) ausgegeben wird.

11. Verfahren nach einem der vorhergehenden Ansprüche,
**dadurch gekennzeichnet,**
**dass** die Verbindungen (V1, V2) zu den durch die abgerufenen Kommunikationsadressen (RN1, RN2) identifizierten Endeinrichtungen (E1, E2) parallel aufgebaut werden.

12. Verfahren nach einem der vorhergehenden Ansprüche,
**dadurch gekennzeichnet,**
**dass** bei Fehlschlagen eines Verbindungsaufbaus zu einer Endeinrichtung (E1, E2) eines Konferenzteilnehmers mindestens ein erneuter Verbindungsversuch in einem vorgegebenen Zeitabstand durchgeführt wird.

13. Verfahren nach einem der vorhergehenden Ansprüche,
**dadurch gekennzeichnet,**
**dass** bei Fehlschlagen eines Verbindungsaufbaus zu einer Endeinrichtung (E1, E2) eines Konferenzteilnehmers eine Rückrufschaltung für diese Endeinrichtung (E1, E2) aktiviert wird.

14. Konferenzaufbaueinrichtung (KAE) zum Aufbau einer Konferenzschaltung (K1), mit
a) Auslösemitteln (ST, AS, BS) zum Auslösen eines Konferenzaufbaus bei Empfang einer Auslöseinformation (AI),
b) Adresserfassungsmitteln (MEM) zum durch die Auslöseinformation (AI) ausgelösten Abrufen mehrerer gespeicherter, Endeinrichtungen (E1, E2) von Konferenzteilnehmern identifizierender Kommunikationsadressen (RN1, RN2), und
c) einer Verbindungssteuerung (VST) zum Aufbau von Verbindungen (V1, V2) zu den durch die erfassten Kommunikationsadressen (RN1, RN2) identifizierten Endeinrichtungen (E1, E2) sowie zum Zuschalten der Endeinrichtungen (E1, E2) zur Konferenzschaltung (K1).

15. Konferenzaufbaueinrichtung nach Anspruch 14,
**dadurch gekennzeichnet,**
**dass** die Auslösemittel eine Benutzerschnittstelle (BS) für einen Benutzer einer Endeinrichtung (E0) aufweisen.

16. Konferenzaufbaueinrichtung nach Anspruch 14 oder 15,
**dadurch gekennzeichnet,**
**dass** die Auslösemittel eine Anwendungsschnittstelle (AS) zu einer Terminkalenderanwendung (TK) aufweisen.

17. Konferenzaufbaueinrichtung nach einem der Ansprüche 14 bis 16,
**gekennzeichnet durch**
Ausgabemittel (AQ) zum Abrufen einer Hinweisinformation (H1, H2, S1, S2) über den Konferenzaufbau und zum Ausgeben der Hinweisinformation (H1, H2, S1, S2) an eine Endeinrichtung (E0, E1, E2) eines Konferenzteilnehmers.

18. Endeinrichtung (E0) mit integrierter Konferenzaufbaueinrichtung (KAE) nach einem der Ansprüche 14 bis 17.
